# EUROPEAN PATENT APPLICATION

(11) **EP 4 670 887 A2**
(43) Date of publication of application: **31.12.2025**
(21) Application number: 25185890.8
(22) Date of filing: 27.06.2025
(51) Int. Cl.: B23D 61/02, B23D 61/04, B23D 65/00

(54) **SAW BLADE**

(30) Priority: 27.06.2024 US 202463664917 P
(71) Applicant: Milwaukee Electric Tool Corporation, Brookfield, WI 53005 (US)
(72) Inventor: ENGLISH, Emily K., Wauwatosa, WI (US); KASTEN, Kenneth A, Waukesha, WI (US); LANGE, Brandon J., Milwaukee, WI (US); OLBERDING, Jason G., Brookfield, WI (US)
(74) Representative: Forresters IP LLP

(57) **Abstract**

A circular saw blade includes an arbor located in a center of the body, a bore positioned in the arbor and configured to fit on a power tool shaft, a plurality of cutting teeth spaced along an outer edge of the body, and a plurality of openings formed in the body between the plurality of cutting teeth and the arbor. The plurality of openings includes a first opening and a second opening disposed radially inward from the first opening relative to the center of the body. The second opening at least partially overlapping the first opening in a circumferential direction, a radial direction, or both.

## Description

### CROSS-REFERENCE TO RELATED APPLICATIONS

This application claims priority to U.S. Provisional Patent Application No. 63/664,917, filed June 27, 2024, the entire contents of which are incorporated by reference herein.

### FIELD OF THE INVENTION

The present disclosure relates to saw blades, such as circular saw blades.

### BACKGROUND OF THE INVENTION

Saw blades, such as circular saw blades, table saw blades, chop saw blades, reciprocating saw blades, hand saw blades, and/or the like, are used to remove material from a workpiece to create a cut therein.

### SUMMARY OF THE INVENTION

In some aspects, the techniques described herein relate to a circular saw blade including a body; an arbor located in a center of the body; a bore positioned in the arbor and configured to fit on a power tool shaft; a plurality of cutting teeth spaced along an outer edge of the body; and a plurality of openings formed in the body between the plurality of cutting teeth and the arbor, the plurality of openings including a first opening and a second opening disposed radially inward from the first opening relative to the center of the body, the second opening at least partially overlapping the first opening in a circumferential direction, a radial direction, or both.

In some aspects, the techniques described herein relate to a circular saw blade including a body; an arbor located in a center of the body; a bore positioned in the arbor and configured to fit on a power tool shaft; a plurality of cutting teeth spaced along an outer edge of the body; and a plurality of openings formed in the body between the plurality of cutting teeth and the arbor, the plurality of openings is arranged in a circle.

In some aspects, the techniques described herein relate to a method of manufacturing a circular saw blade, the method including providing a body; forming an arbor in a center of the body, the arbor having a bore configured to fit on a power tool shaft; forming a plurality of cutting teeth along an outer edge of the body; welding a plurality of inserts to the plurality of cutting teeth, each insert forming a tip of a corresponding cutting tooth; and applying a coating via physical vapor deposition to at least the plurality of inserts after the plurality of inserts is welded to the plurality of cutting teeth.

In some aspects, the techniques described herein relate to a circular saw blade including a body; an arbor located in a center of the body; a bore positioned in the arbor and configured to fit on a power tool shaft; a plurality of cutting teeth spaced along an outer edge of the body, each cutting tooth defining a pocket; a plurality of inserts welded to the plurality of cutting teeth, each insert positioned in the pocket and forming a tip of a corresponding cutting tooth; and a physical vapor deposition coating applied to at least the plurality of inserts.

The present disclosure provides, in one aspect, a saw blade including a body constructed of a first material, an arbor disposed in a center of the body, a plurality of cutting teeth supported on the body, a plurality of inserts coupled to the plurality of cutting teeth and constructed of a second material, and a plurality of openings disposed between the plurality of cutting teeth and the arbor.

### BRIEF DESCRIPTION OF THE DRAWINGS

FIG. 1 is a side view of a saw blade, according to an embodiment of the present disclosure.
FIG. 2 is an enlarged view of a plurality of cutting teeth of the saw blade of FIG. 1.
FIG. 3 is a side view of an insert for use with the saw blade of FIG 1.
FIG. 4 is an enlarged view of a pocket of the saw blade taken at callout 5-5 of FIG. 2, with the insert removed.
FIG. 5 is an enlarged view of the insert welded to the pocket with approximately 1 millimeter of displacement.
FIG. 6 is an enlarged view of the insert welded to the pocket with approximately 2 millimeters of displacement.
FIG. 7 is a schematic of an oven configured to temper the saw blade of FIG. 1.
FIG. 8 is a perspective view of an edge preparation process.
FIG. 9 is an enlarged view of a cutting edge of an insert.
FIG. 10 is a cross-sectional view of an insert with a coating applied to the insert.
FIG. 11 is a side view of a saw blade, according to an embodiment of the present disclosure.
FIG. 12 is a side view of a saw blade, according to an embodiment of the present disclosure.
FIG. 13 is a side view of a saw blade, according to an embodiment of the present disclosure.
FIG. 14 is a side view of a saw blade, according to an embodiment of the present disclosure.
FIG. 15 is a side view of a saw blade, according to an embodiment of the present disclosure.
FIG. 16 is a side view of a saw blade, according to an embodiment of the present disclosure.
FIG. 17 is a side view of a saw blade, according to an embodiment of the present disclosure.
FIG. 18 is a side view of a saw blade, according to an embodiment of the present disclosure.
FIG. 19 is a side view of a saw blade, according to an embodiment of the present disclosure, the saw blade including a body and a plurality of cutting teeth defining a cutting diameter.
FIG. 20 is an enlarged view of a portion of the saw blade of FIG. 19, illustrating some of the plurality of cutting teeth.
FIG. 21 is a front view of the saw blade of FIG. 19, illustrating a width of the body and a kerf defined by the cutting diameter.
FIG. 22 is a side view of a saw blade, according to another embodiment of the present disclosure, the saw blade including a body and a plurality of cutting teeth defining a cutting diameter.
FIG. 23 is an enlarged view of a portion of the saw blade of FIG. 22, illustrating some of the plurality of cutting teeth.
FIG. 24A is a front view of the saw blade of FIG. 22, illustrating a width of the body and a kerf defined by the cutting diameter.
FIG. 24B is an enlarged view of a portion of the saw blade of FIG. 22, illustrating adjacent cutting teeth.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

### DETAILED DESCRIPTION

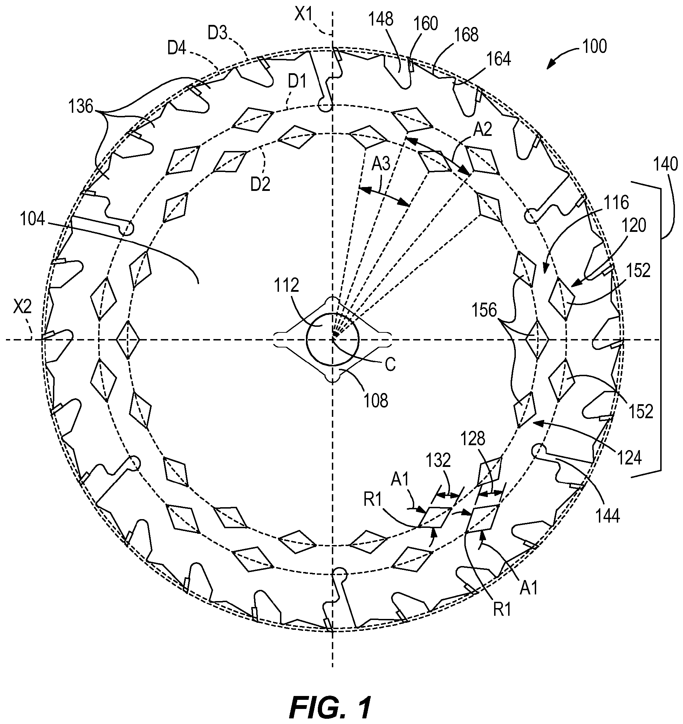

FIG. 1 illustrates a saw blade 100, according to an embodiment of the present disclosure. In the illustrated embodiment, the saw blade 100 is a circular saw blade that is selectively useable with a circular saw, a table saw, a miter saw, or the like. However, in other embodiments, the saw blade 100 can be a different type of saw blade that can be coupled to a corresponding power tool.

As illustrated in FIG. 1, the saw blade 100 includes a core portion or body 104, an arbor 108 located in a center C of the body 104, and a bore 112 positioned in the arbor 108 and configured to allow the saw blade 100 to fit on a power tool shaft that has a complementary shape to the bore 112. The arbor 108 is bisected by an axis X1 and an axis X2. The axes X1, X2 are perpendicular to one another and intersect the center C of the body 104. In the illustrated embodiment, the bore 112 has a circular shape and is configured to fit on a circular shaft. In other embodiments, the bore 112 and shaft may both be another shape, such as a diamond, square, hexagon, semi-circle, and/or the like.

With continued reference to FIG. 1, the saw blade 100 includes a plurality of openings 116 positioned about the body 104. The openings 116 provide heat dissipation, material relief, airflow, etc. In the illustrated embodiment, the openings 116 are polygonal (e.g., square, diamond, triangular, etc.), but the openings 116 could be circular, semi-circular, or the like. In some embodiments, the openings 116 are formed via stamping. In other embodiments, the openings 116 may be formed by cutting (e.g., laser cutting). The illustrated saw blade 100 includes outer openings 120 and inner openings 124. The outer openings 120 may also be referred to as first openings, and the inner openings 124 may also be referred to as second openings. In the illustrated embodiment, the saw blade 100 includes a plurality of outer openings 120 and a plurality of inner openings 124. In other embodiments, the saw blade 100 may only include one outer opening 120 and/or one inner opening 124.

The outer openings 120 are arranged in a first circle and define a first diameter D1. In the illustrated embodiment, the first diameter D1 is approximately 148 millimeters and is concentric with the center C. In other embodiments, the first diameter D1 is between 120 and 220 millimeters. The inner openings 124 are arranged in a second circle and define a second diameter D2. The second diameter D2 is less than the first diameter D1. The second diameter D2 is approximately 130 millimeters and is concentric with the diameter D1. As such, the inner openings 124 are located radially inward of the outer openings 120. In other embodiments, the second diameter D2 is between 100 and 200 millimeters.

The outer openings 120 and the inner openings 124 have similar shapes (e.g., polygonal shapes and, more specifically, diamond shapes), but are different sizes. In particular, the inner openings 124 are smaller than the outer openings 120. Each of the outer openings 120 has a width 128, an angle A1, and a radius R1. In the illustrated embodiment, the width 128 is 6 millimeters, the angle A1 is 60 degrees, and the radius R1 is 0.5 millimeters. In other embodiments, the width 128 is between 4 millimeters and 12 millimeters. Each of the inner openings 124 has a width 132, the angle A1, and the radius R1. In the illustrated embodiment, the width 132 is 7 millimeters and the angle A1 and radius R1 are equivalent to measurements of the outer openings 120. In other constructions, the width 132 is between 6 millimeters and 14 millimeters. In other constructions, the outer openings 120 and/or the inner openings 124 are formed via a laser cut such that the radius R1 is minimal or nonexistent (e.g., a sharp corner). The size of the outer openings 120 and/or the inner openings 124 can be as small as the diameter of the laser beam. As such, each outer opening 120 has a larger area than each inner opening 124. In other words, each outer openings 120 has a first area, and each inner opening 124 has a second area that is less than the first area. The openings 116 reduce a volume of the saw blade 100 (e.g., a volume of material that makes up the saw blade 100) by at least 5%. In some embodiments, the openings 116 reduce the volume of the saw blade 100 by between 5% and 10%. In the illustrated embodiment, the openings 116 reduce the volume of the saw blade 100 by about 6%. The size of the openings 116 depends on the thickness of the saw blade 100. In general, a thicker saw blade will require a larger size of the openings 116.

The saw blade 100 further includes a plurality of cutting teeth 136 that are spaced along an outer edge of the body 104. The cutting teeth 136 and the body 104 may be made from a variety of materials, such as high carbon steel. In the illustrated embodiment, the cutting teeth 136 are integrally formed as a single piece with the body 104. In other embodiments, the body 104 may be made of bi-metal and the cutting teeth 136 may be formed in high-speed steel that is bonded to the body 104. In other words, the cutting teeth 136 are supported on the body 104. In still other embodiments, the saw blade 100 may be made from a variety of materials, such as when a saw blade 100 is a masonry blade. In the illustrated embodiment, all of the cutting teeth 136 are generally the same shape and size, although relative dimensions of each tooth of the cutting teeth 136 could be different in other embodiments.

In the illustrated embodiment, the openings 116 and the cutting teeth 136 are arranged in consecutive segments 140 about the saw blade 100. In the illustrated embodiment, the segments 140 are separated by one or more slots 144. The slots 144 may enable flexing (e.g., expansion, compression, etc.) of the cutting teeth 136/segments 140 under certain conditions, such as high-heat cutting applications. In the illustrated embodiment, the saw blade 100 includes six slots 144 separating the cutting teeth 136 into six segments 140. In other embodiments, the saw blade 100 may include fewer or more slots 144 separating the cutting teeth 136 into fewer or more segments 140. That is, the saw blade 100 can have any number of cutting teeth 136 and segments 140. In some constructions, the saw blade 100 defines a cutting diameter D3 of 7.25 inches and includes 4 slots 140 and 15 teeth per slot 140 (i.e., 60 teeth). In some constructions, the saw blade 100 defines the cutting diameter D3 of 10.25 inches and includes 4 slots 140 and 10 teeth per slot 140 (i.e., 40 teeth). In some constructions, the saw blade 100 defines the cutting diameter D3 of 12 inches and includes 4 slots 140 and 25 teeth per slot 140 (i.e., 100 teeth). In some constructions, the saw blade 100 defines the cutting diameter D3 of 12 inches and includes 5 slots 140 and 20 teeth per slot 140 (i.e., 100 teeth). In the illustrated embodiment, there are four cutting teeth of the plurality of cutting teeth 136 in each segment 140. In some embodiments, the saw blade 100 may include approximately one to eight cutting teeth 136 in each segment 140. In general, adjacent cutting teeth 136 are separated by a gullet 148 that allows for debris (e.g., chips, chunks, etc.) passage during the cutting operation. That is, the body 104 includes a plurality of gullets 148. In the illustrated embodiment, the slots 144 extend generally inward from the gullets 148. The illustrated slots 144 extend inwardly at an angle.

In the illustrated embodiment, each segment 140 includes corresponding openings of the plurality of openings 116. Specifically, each segment 140 includes two openings 152 of the outer openings 120 and three openings 156 of the inner openings 124. In other embodiments, the number of the inner and the outer openings 120, 124 for each segment 140 is selected based on requirements for saw blade size (i.e., diameter), heat dissipation, material relief, airflow, etc. Each opening of the two openings 152 are separated by an angle A2, and each opening of the three openings 156 are separated by an angle A3. In the illustrated embodiment, the angles A2, A3 are approximately 20 degrees. The outer openings 120 are offset or staggered relative to the inner openings 124. That is, each of the outer openings 120 is positioned circumferentially between two adjacent inner openings 124. As such, a portion of each of the outer opening 120 circumferentially overlaps with a portion of at least one of the inner openings 124. Similarly, a portion of each of the inner openings 124 circumferentially overlaps with a portion of at least one of the outer openings 120. In other words, at least one of the outer openings 120 at least partially overlaps with at least one of the inner openings 124 in a circumferential direction. In the illustrated embodiment, the outer openings 120 and the inner openings 124 do not overlap in a radial direction (i.e., along a radius of the saw blade 100). However, peaks of the outer openings 120 and the inner openings 124 may be radially aligned. That is, a radial innermost peak of one or more of the outer openings 120 may be the same radial distance from the center C of the saw blade 100 as a radial outer most peak of one or more of the inner openings 124. In other embodiments, a portion of at least one of the outer openings 120 may radially overlap with a portion of at least one of the inner openings 124. The openings 116 are configured to create airgaps between the cutting teeth 136 and the body 104 of the saw blade 100. The air gaps reduce heat build up near the center of the body 104 by creating gaps (e.g., voids) where the heat can be dissipated and by reducing direct paths of material from an outer edge of the saw blade 100 to the center of the body 104.

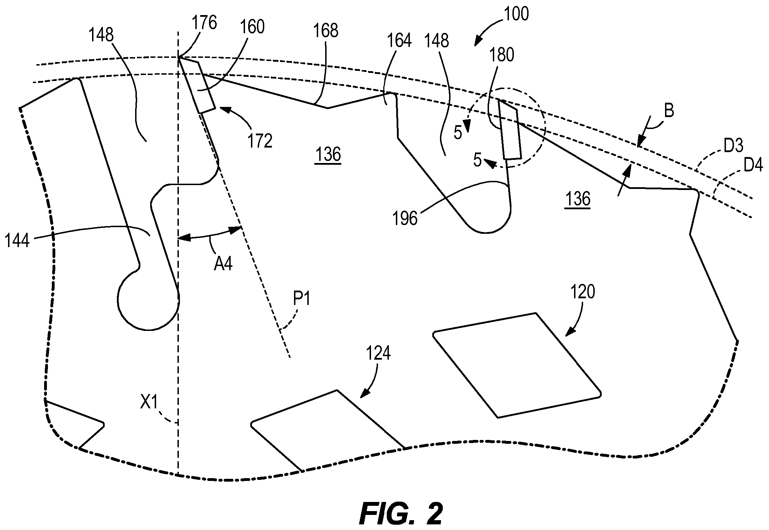

Referring now to FIG. 2, each of the cutting teeth 136 includes a tip 160, a heel face 164, and one or more relief surfaces 168 extending between the tip 160 and the heel face 164. In general, the gullet 148 is formed between the tip 160 and the heel face 164 of adjacent cutting teeth 136. In other words, the gullets 148 separate adjacent cutting teeth 136.

With continued reference to FIG. 2, the saw blade 100 includes a plurality of inserts 172. In the illustrated embodiment, each of the cutting teeth 136 includes an insert 172 that forms at least a part of the cutting teeth 136. In some constructions, the inserts 172 are cylindrically shaped when initially coupled (e.g., welded) to the cutting teeth 136. In other constructions, the inserts 172 may have other shapes, such as a cube, rectangular prism, a hexagonal prism, and other shapes. After coupling the inserts 172 can be formed (e.g., ground) to desired shapes of the cutting teeth 136. For example, the insert 172 forms the tip 160 and part of the relief surface 168. In the illustrated embodiment, the inserts 172 are made of carbide (e.g., tungsten carbide) or a similar material. The inserts 172 may be fastened (e.g., welded or otherwise secured) to the cutting teeth 136. More particularly, the inserts 172 may be resistance welded to the cutting teeth 136. In some embodiments, only some of the cutting teeth 136 include an insert 172. In other embodiments, the cutting teeth 136 do not include the inserts 172. The inserts 172 may be made of a material that is different than the body 104 and the rest of each cutting tooth 136. In other embodiments, the inserts 172 are made of a similar material as the body 104 and the rest of the cutting teeth 136, such as high-speed steel.

In the illustrated embodiment, the insert 172 includes a cutting edge 176. The cutting edge 176 of the inserts 172 collectively define the cutting diameter D3 of the saw blade 100. It is worth noting that the cutting diameter D3 may vary depending on the size of the saw blade 100. In some constructions, the cutting diameter D3 is between 5.375 inches and 12 inches. As the cutting diameter D3 increases or decreases, the first diameter D1 and the second diameter D2 will increase or decrease. In the illustrated construction, the first diameter of D1 is between 60% to 90% of the cutting diameter D3. In the illustrated construction, the second diameter D2 is between 45% to 80% of the cutting diameter D3. Each of the inserts 172 include a rake face 180 that extends from the cutting edge 176 and defines a hook angle A4 relative to the axis X1 (or any straight-line segment that passes through the center C of the saw blade 100 and whose endpoints lie on the cutting diameter D3) of the saw blade 100. More specifically, the axis X1 extends through or intersects the edge 176 of the tip 160. The edge 176 is the corner (or point) of the tip 160 furthest from the remainder of the cutting tooth 136. The edge 176 may be the portion of the tip 160 that is circumferentially furthest from the remainder of the cutting tooth 136. The rake face 180 defines a plane P1. The hook angle A4 is the angle at which the cutting edge 176 of the saw blade 100 enters a material. In the illustrated embodiment, the hook angle A4 is 18 degrees. In some embodiments, the hook angle A4 may be between 13 and 22 degrees. More specifically, the hook angle A4 may be between 17 and 19 degrees.

The amount of material removed by the saw blade 100 may be limited by the heel face 164. The heel face 164 collectively defines a limiting diameter D4. A distance B represents bite distance, or in other words, the material removed by the saw blade 100. The difference in size (i.e., the bite distance) between the limiting diameter D4 and the cutting diameter D3 is between 1 and 6 millimeters. The bite distance may vary depending on the size of the saw blade 100 (i.e., the cutting diameter D3). As such, the distance B is equivalent to the difference in size of the cutting diameter D3 and the limiting diameter D4 divided by two. In the illustrated embodiment, the distance B is 0.65 millimeters. In other embodiments, the distance B may be between 0.50 millimeters to 2.5 millimeters. In other embodiments, the distance B may be less than 3 millimeters.

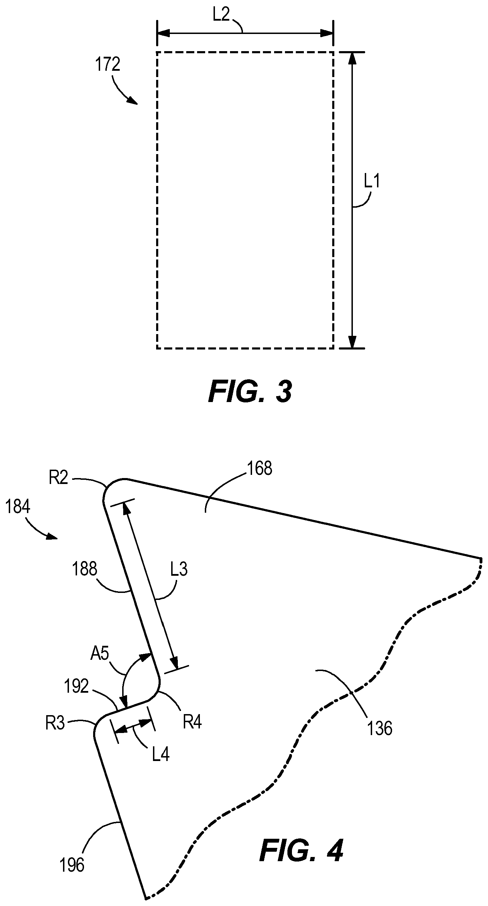

FIG. 3 illustrates one of the inserts 172. The insert 172 is illustrated before being welded to the saw blade 100. The insert 172 includes a length L1 (i.e., a height) and a length L2 (i.e., a width). In the illustrated embodiment, the length L1 is about 5 millimeters and the length L2 is about 1 millimeter. In other embodiments, the length L1 is in the range between 2 millimeters and 10 millimeters and the length L2 is in the range between 1.5 millimeters and 4 millimeters. The lengths L1 and L2 may vary depending on the size of the saw blade 100 (i.e., the cutting diameter D3). In the illustrated embodiment, the insert 172 is comprised of at least 3% to 20% cobalt and at least 60% tungsten. Specifically, the insert 172 is comprised of 10% cobalt. In the instance of welding the insert 172 to the cutting teeth 136, the cobalt of the insert 172 melts first. The cobalt contributes to ductility of the insert 172 whereas the tungsten contributes to the hardness. The insert 172 may be plated before being welded to the cutting teeth 136. In some embodiments, the plating includes at least 80% cobalt. In some embodiments, the plating includes at least 80% nickel.

FIG. 4 is a detailed view of a cutting tooth of the cutting teeth 136 without the insert 172. The cutting tooth 136 includes a pocket 184 that is configured to receive the insert 172. In the illustrated embodiments, the pocket 184 is stamped into the cutting tooth 136. In other embodiments, the pocket 184 may be cut (e.g., laser cut) or otherwise machined or formed in the cutting tooth 136. The pocket 184 includes a first wall 188 and a second wall 192. The first wall 188 has a length L3 and the second wall 192 has a length L4. In the illustrated embodiment, the length L3 of the first wall 188 is between 20% and 70% of the length L1 of the insert. Specifically, the length L3 of the first wall 188 is 40% and 50% the length L1 of the insert 172. In the illustrated embodiment, the length L3 is 2.4 millimeters. In some embodiments, the length L3 is between 0.5 millimeters and 6 millimeters. In the illustrated embodiment, the length L4 of the second wall 192 is between 30% and 100% the length L2 of the insert 172. Specifically, the length L4 of the second wall 192 is a minimum of 40% of the length L2. In the illustrated embodiment, the length L4 is 1.5 millimeters. In some embodiments L4 is between 0.5 millimeters and 3.5 millimeters. The first wall 188 is adjacent to the relief surface 168 and includes a radius R2 between the first wall 188 and the relief surface 168. In the illustrated embodiment, the radius R2 is in the range of 0.2 millimeters to 0.6 millimeters. In other constructions, the radius R2 is formed via a laser cut such that the radius R2 is minimal or nonexistent (e.g., a sharp corner). The second wall 192 is adjacent to a wall 196 of the gullet and includes a radius R3 between the second wall 192 and the wall 196. In the illustrated embodiment, the radius R3 is between 0.2 millimeters and 0.6 millimeters. In other constructions, the radius R3 is formed via a laser cut such that the radius R3 is minimal or nonexistent (e.g., a sharp corner). The first and the second walls 192 are positioned relative to one another by a pocket angle A5. In the illustrated embodiment, the pocket angle A5 is between 60 degrees and 110 degrees. In some embodiments, the pocket angle A5 may be between 70 degrees and 90 degrees. The first and second walls 188, 192 are connected by a radius R4. In the illustrated embodiment, the radius R4 is between 0.2 millimeters and 0.6 millimeters. In other constructions, the radius R4 is formed via a laser cut such that the radius R4 is minimal or nonexistent (e.g., a sharp corner).

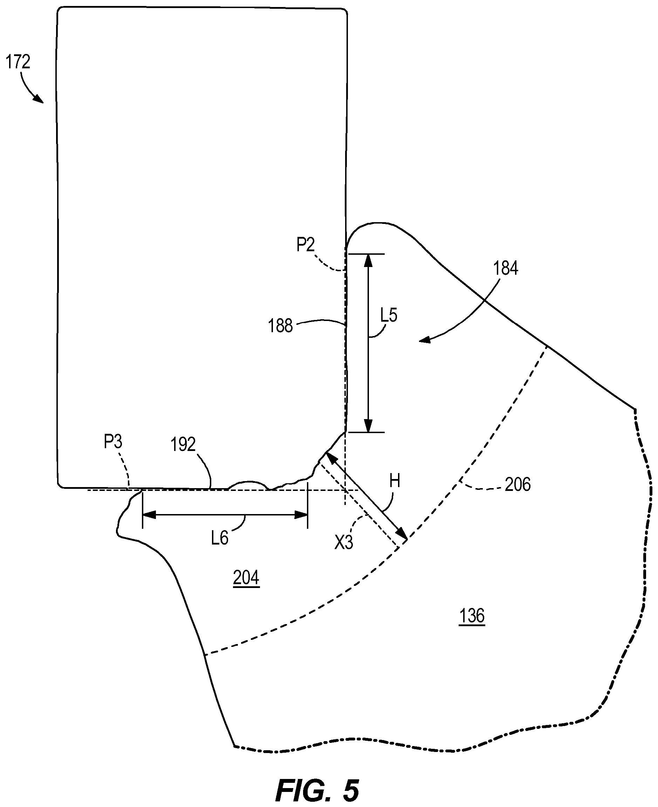

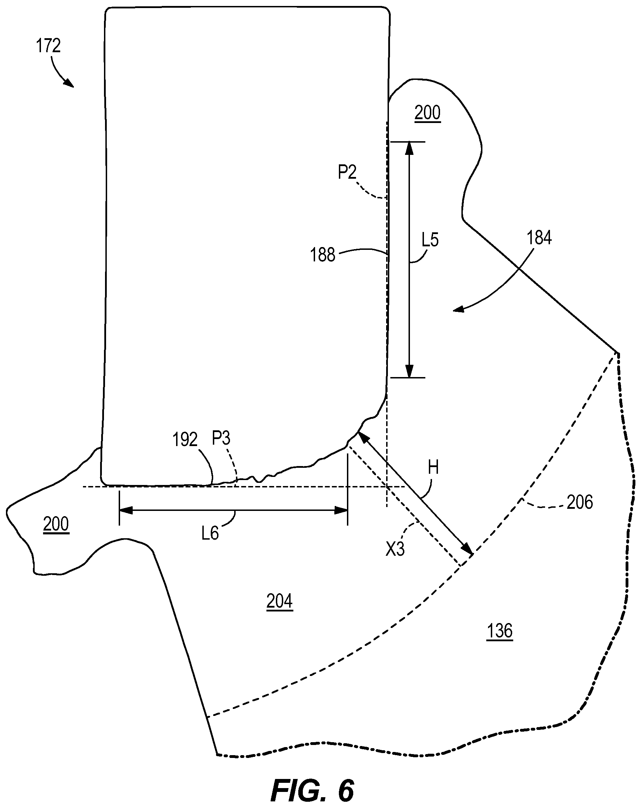

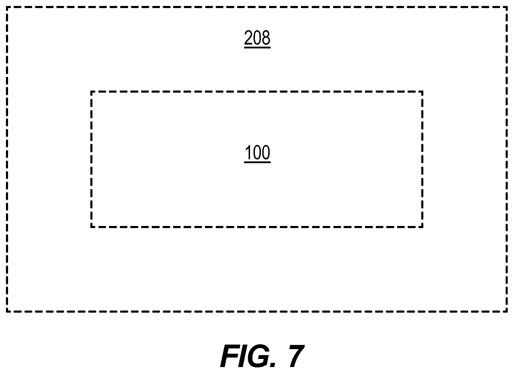

FIGS. 5 and 6 illustrate the insert 172 welded to the pocket 184 with different amounts of energy supplied to the weld. A plane P2 is defined by a wall of the insert 172 that contacts the first wall 188 and a plane P3 is defined by a wall of the insert 172 that contacts the second wall 192 during the weld. In the illustrated embodiment, the planes P2, P3 are generally perpendicular to one another. The orientation of the planes P2, P3 are dependent on the geometry of the insert 172. The weld between the insert 172 and the pocket 184 is measured with differing levels of displacement. Since the insert 172 has a higher melting point than the cutting teeth 136, the pocket 184 melts or forms around the insert 172. Increasing the energy supplied to the weld between the insert 172 and the pocket 184 will cause more of the pocket 184 to surround or enclose the insert 172. A displacement of the insert 172 can be measured along an axis X3 that bisects the planes P2, P3. The displacement reflects the energy supplied to the weld by measuring the linear distance of a corner of the insert 172 (e.g., a corner defined between the walls of the insert 172 that define the planes P2, P3). Due to the displacement of the pocket 184 around the insert 172, a distance displaced along the axis X3 is not shown. With reference to FIG. 5, the displacement of the insert 172 along the axis X3 is approximately 1 millimeter. With reference to FIG. 6, the displacement of the insert 172 along the axis X3 is approximately 2 millimeters. Since the displacement of the insert 172 is difficult to discern between FIGS. 4-6, a length along the planes P2, P3 can be measured. A weld length L5 is the length of the weld measured on the plane P2, and a weld length L6 is the length of the weld measured on the plane P3. With specific reference to FIG. 6, the weld length L5 is 1.3 millimeters and the weld length L6 is approximately 1 millimeter. With specific refence to FIG. 7, the weld length L5 is approximately 1.6 millimeters and the weld length L6 is approximately 2 millimeters. The weld lengths L5, L6 are greater in FIG. 7 because more energy was supplied to the weld of FIG. 7.

As shown in FIG. 5 and 6, a heat affected zone (HAZ 204) develops on the cutting teeth 136 as a result of welding the insert 172 to the pocket 184. The HAZ 204 is on the cutting teeth 136 and extends from the weld site to a border 206. The border 206 in the shape of an arc and is located around the pocket 184. After the weld, the area within the HAZ 204 maintains a Rockwell value (HRC) of 65. The area of the cutting tooth 136 on the other side of the border 206 maintains an HRC of 44. For reference, before the weld, the cutting teeth 136 maintain an HRC of 44. As the HRC value increases, the hardness, and therefore the brittleness of the material, increases. The border 206 is located at a distance H from the insert 172. The distance H is measured along the axis X3 that bisects the planes P2, P3. With specific reference to FIG. 5, the distance H is approximately 1 millimeter. With specific refence to FIG. 6, the distance H is approximately 1.4 millimeters. Since the distance H is larger in FIG. 6, the HAZ 204 occupies a larger area of the cutting tooth 136. As mentioned above, more energy was supplied to the weld of FIG. 6, therefore increasing the distance H compared to FIG. 6.

As illustrated in FIG. 6, a pair of protrusions 200 extending from the pocket 184 are formed as a result of the weld. In some embodiments, the pair of protrusions 200 are eliminated in a process (e.g., grinding) after the weld.

FIG. 7 illustrates an oven 208 for use with the saw blade 100 after the inserts 172 are welded to the cutting teeth 136. Specifically, the oven 208 is configured to receive the entire saw blade 100 for tempering. Tempering is used to reduce the internal stresses and brittleness in the saw blade 100, and specifically the HAZ 204. In the illustrated embodiment, the saw blade 100 is inserted into the oven 208 for 2.5 hours at 500 degrees Fahrenheit. After being removed from the oven 208, the HAZ 204 maintains an HRC value of 58. In some embodiments, the saw blade 100 is inserted into the oven 208 between 30 minutes and 3 hours at a temperature between 300 degrees Fahrenheit and 800 degrees Fahrenheit. After tempering, the HAZ 204 has an HRC value between 50 and 60. In other embodiments, the tempering process may be performed with an induction coil that this situated around the HAZ 204.

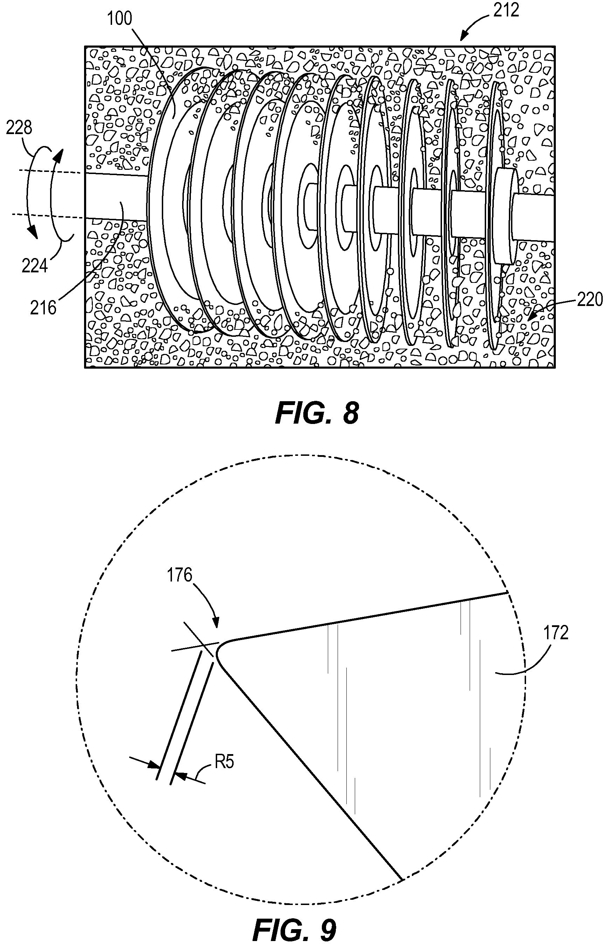

FIG. 8 illustrates an edge preparation process 212 (i.e., edge prepping) for the saw blade 100. The edge prepping 212 may include removing sharp edges and curves from the cutting edge 176. Specifically, one or more saw blades 100 are coupled to a shaft 216 and lowered into a pit with a plurality of loose pellets 220. In the illustrated embodiment, the saw blades 100 will spin in a first direction 224 for approximately 90 second and spin in a second direction 228 that is opposite to the first direction for 90 seconds. In other embodiments, the edge preparation process 212 may only spin the saw blades 100 in one direction and/or may spin the saw blades 100 for different amounts of time.

FIG. 9 illustrates the cutting edge 176 after the edge preparation process 212. The edge preparation process creates a radius R5 on sharp edges of the inserts 172. In the illustrated embodiment, the radius R5 is 0.055 millimeters. In other embodiments, the radius R5 is between 0.025 millimeters to 0.100 millimeters.

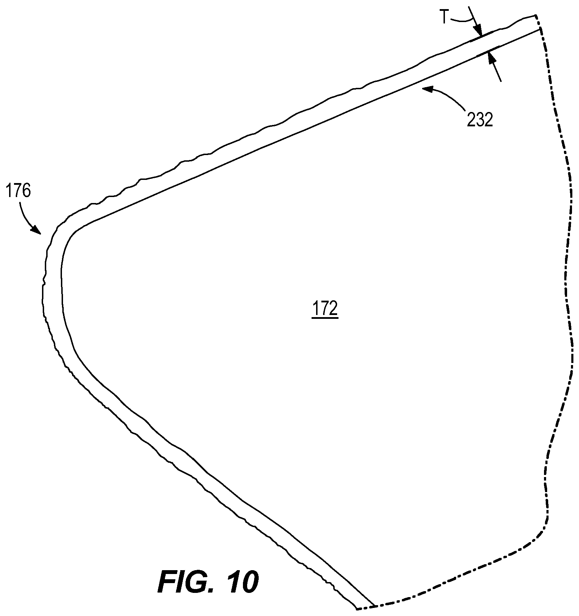

FIG. 10 illustrates the insert 172 including a coating 232. In the illustrated embodiment, the coating is a physical vapor deposition (PVD) coating that is applied to at least the insert 172 after edge prepping 212. In some embodiments, the PVD coating 232 may be applied to each cutting tooth 136, including the inserts 172. In still other embodiments, the PVD coating 232 may be applied to the entire saw blade 100. PVD is a process in which a material, such as the coating 232, goes from a condensed phase, to a vapor phase, and subsequently back to a thin film condensed phase, producing a thin film or coating. In some embodiments, the PVD process may include evaporation, in which vapor particles of the coating 232 travel directly to the substrate (i.e., the insert 172), where the particles condense back to a solid state. In other embodiments, the PVD process may include sputtering, in which a thin film is deposited from a source onto the substrate. In further embodiments, the coating 232 may be applied via additional methods such as hot-dip galvanizing, thermal spraying, electroplating, sherardizing, and the like. The coating 232 includes a thickness T across the insert 172. In the illustrated embodiment, the thickness is between 1 micrometer and 6 micrometers. In other embodiments, the thickness T is between 3 micrometers and 6 micrometers. In other embodiments, the thickness T is between 2 micrometers and 8 micrometers.

The coating 232 comprises a mixture of nitrides of aluminum, chromium, and/or titanium. Aluminum composition in the mixture may range between 18% to 45%. Chromium composition in the mixture may range between 25% to 45%. Titanium composition in the mixture may range between 15% to 30%. The compositions listed above are by weight of the coating. The coating 232 is applied to the insert 172 that has a cobalt composition between 3% and 18%. The coating 232 improves a cutting performance of the saw blade 100, such as cutting speed and life of the saw blade 100. When the coating 232 is applied to the inserts 172 that are welded (e.g., resistance welded) to the cutting teeth 136, rather than brazed, the PVD process does not degrade material of the saw blade, such as brazing material. Additional details regarding PVD coating and/or functions thereof are disclosed in U.S. Patent No. 12,145,207, the entire contents of which are incorporated herein by reference.

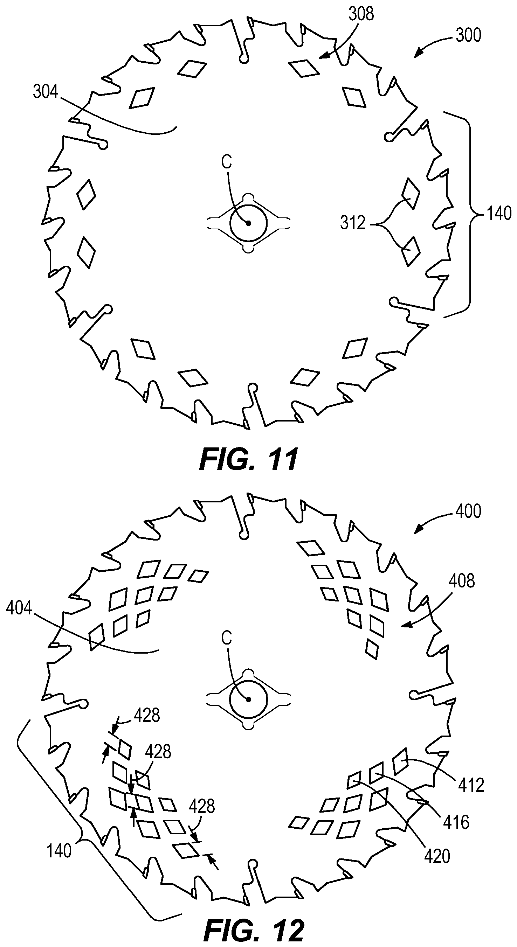

FIG. 11 illustrates another embodiment of a saw blade 300, according to the disclosure. The saw blade 300 includes a body 304 including a plurality of openings 308. The openings of the plurality of openings 308 are in the shape of diamonds. The openings 308 are arranged in a single circle around the body 304. Specifically, the body 304 includes a pair 312 of openings for each of the segments 140. In total, the plurality of openings 308 includes 12 openings. In other embodiments, the saw blade 300 may include fewer or more openings 308.

FIG. 12 illustrates another embodiment of a saw blade 400, according to the disclosure. The saw blade 400 includes a body 404 including a plurality of openings 408. The openings of the plurality of openings 408 are in the shape of diamonds. Specifically, the body 404 includes outer openings 412, middle openings 416, and inner openings 420 for each of the segments 140. The outer openings 412 are generally arranged in a first circle, the middle openings 416 are generally arranged in a second circle, and the inner openings 420 are generally arranged in a third circle. The outer openings 412 are disposed radially outward relative to the middle openings 416, and the middle openings 416 are disposed radially outward relative to the inner openings 420. The openings of the outer openings 416 include a width 428 that is greater than the width 428 of openings of the middle openings 416. The width 428 of the middle openings 416 is greater than the width 428 of openings of the inner openings 420. That is, the outer openings 412 are generally larger than the middle openings 416, and the middle openings 416 are generally larger than the inner openings 420. The openings 412, 416, 420 are arranged in clusters in each segment 140. Each of the outer, middle, and inner openings 412, 416, 420 include three openings for each segment 140. The three openings of the outer, middle, and inner openings 412, 416, 420 are angularly staggered relative to one another from the center C of the saw blade 400. The middle openings 416 partially overlap the outer openings 412 in the circumferential direction and in the radial direction, and partially overlap the inner openings 420 in the circumferential direction and in the radial direction. In total, the outer, middle, and inner openings 412, 416, 420 amount to 36 openings. In other embodiments, the saw blade 400 may include fewer or more openings 412, 416, 420 in each segment 140 and/or a different number of segments 140.

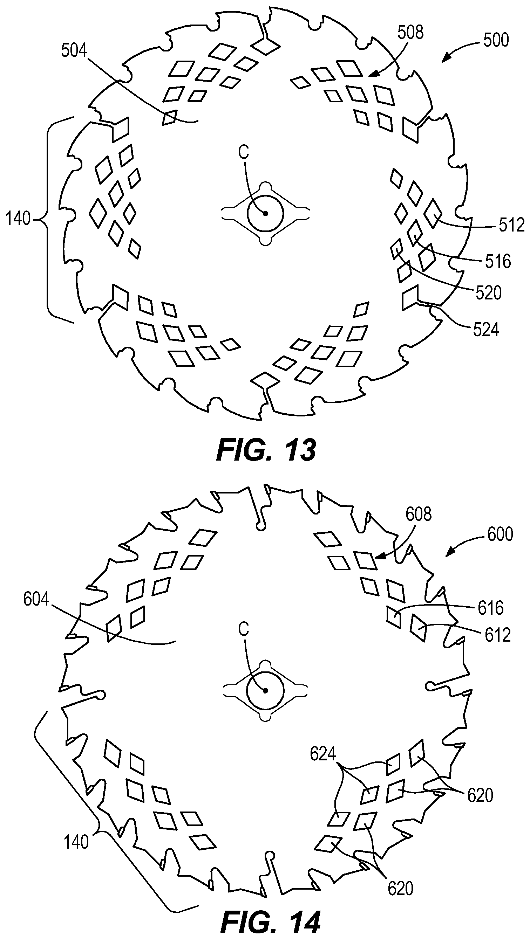

FIG. 13 illustrates another embodiment of a saw blade 500, according to the disclosure. The saw blade 500 includes a body 504 including a plurality of openings 508. The openings of the plurality of openings 508 are in the shape of diamonds. Similar to the body 404, the body 504 includes outer openings 512, middle openings 516, and inner openings 520 for each of the segments 140. The outer openings 512 are disposed radially outward relative to the middle openings 516, and the middle openings 516 are disposed radially outward relative to the inner openings 520. Similar to body 404, each opening of the outer, middle, and inner openings 512, 516, 520 includes a width. The width of each outer opening 512 is larger than the width of each middle opening 516, and the width of each middle opening 520 is larger than the width of each inner opening 520. Each of the outer, middle, and inner openings 512, 516, 520 includes three openings for each segment 140. The three openings of the outer, middle, and inner openings 512, 516, 520 are angularly staggered relative to one another from the center C of the saw blade 500. The middle openings 516 partially overlap the outer openings 512 in the circumferential direction and in the radial direction, and partially overlap the inner openings 520 in the circumferential direction and in the radial direction. In total, the outer, middle, and inner openings 512, 516, and 520 amount to 36 openings. In contrast to the body 404, the body 504 includes slots 524 that are connected to an opening of the outer opening 512.

FIG. 14 illustrates another embodiment of a saw blade 600, according to the disclosure. The saw blade 600 includes a body 604 including a plurality of openings 608. The openings of the plurality of openings 608 are in the shape of diamonds. The body 604 includes outer openings 612 and inner openings 616 for each of the segments 140. The outer openings 612 are disposed radially outward relative to the inner openings 616. Each of the openings of the outer and inner openings 612, 616 includes a width. The widths of the outer openings 612 are larger than the widths of the inner openings 616. The outer openings 612 include four openings 620, and the inner openings 616 include three openings 624 for each segment 140. The openings of the outer and inner openings 612, 616 are angularly staggered relative to one another from the center C of the saw blade 600. The inner openings 616 partially overlap the outer openings 612 in the circumferential direction and in the radial direction. In total, the outer and inner openings 612, 616 amount to 28 openings. In other embodiments, the saw blade 60 may include fewer or more openings 612, 616 in each segment 140 and/or a different number of segments 140.

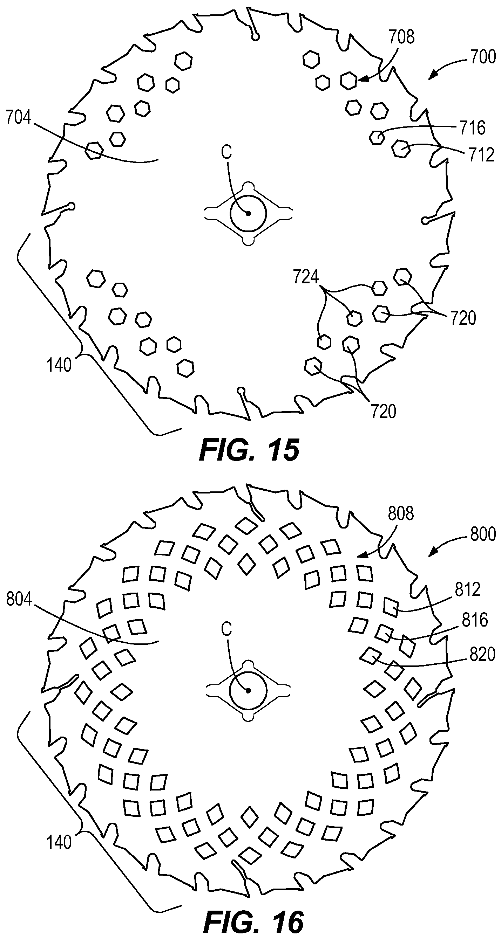

FIG. 15 illustrates another embodiment of a saw blade 700, according to the disclosure. The saw blade 700 includes a body 704 including a plurality of openings 708. The openings of the plurality of openings 708 are in the shape of hexagons. The body 704 includes outer openings 712 and inner openings 716 for each of the segments 140. The outer openings 712 are disposed radially outward relative to the inner openings 716. Each of the openings of the outer and inner openings 712, 716 includes a width. The widths of the outer openings 712 are larger than the widths of the inner openings 716. The outer openings 712 include four openings 720, and the inner openings 716 include three openings 724 for each segment 140. The openings of the outer and inner openings 712, 716 are angularly staggered relative to one another from the center C of the saw blade 700. In total, the outer and inner openings 712, 716 amount to 32 openings. In other embodiments, the saw blade 700 may include fewer or more openings 712, 716 in each segment 140 and/or a different number of segments 140.

FIG. 16 illustrates another embodiment of a saw blade 800, according to the disclosure. The saw blade 800 includes a body 804 including a plurality of openings 808. The openings of the plurality of openings 808 are in the shape of diamonds and squares. Similar to the bodies 404 and 504, the body 804 includes outer openings 812, middle openings 816, and inner openings 820. The outer openings 812 are disposed radially outward relative to the middle openings 816, and the middle openings 816 are disposed radially outward relative to the inner openings 820. The outer and inner openings 812, 820 have the diamond shapes, and the middle openings 816 have the square shapes. The middle openings 816 are angularly staggered relative to the outer and inner openings 812, 820 from the center C. The outer and inner openings 812, 820 are angularly aligned relative to the center C. The outer, middle, and inner openings 812, 816, 820 are not in clusters delegated to the segments 140. Rather, the outer, middle, and inner openings 812, 816, 820 are continuously placed about the center C. In other words, the outer, middle, and inner openings 812, 816, and 820 are not placed on the body 804 based the segment 140. The middle openings 816 partially overlap the outer openings 812 in the circumferential direction and in the radial direction, and partially overlap the inner openings 820 in the circumferential direction and in the radial direction. In total, the outer, middle, and inner openings 812, 816, 820 amount to 70 openings. In other embodiments, the saw blade 800 may include fewer or more openings 812, 816, 820.

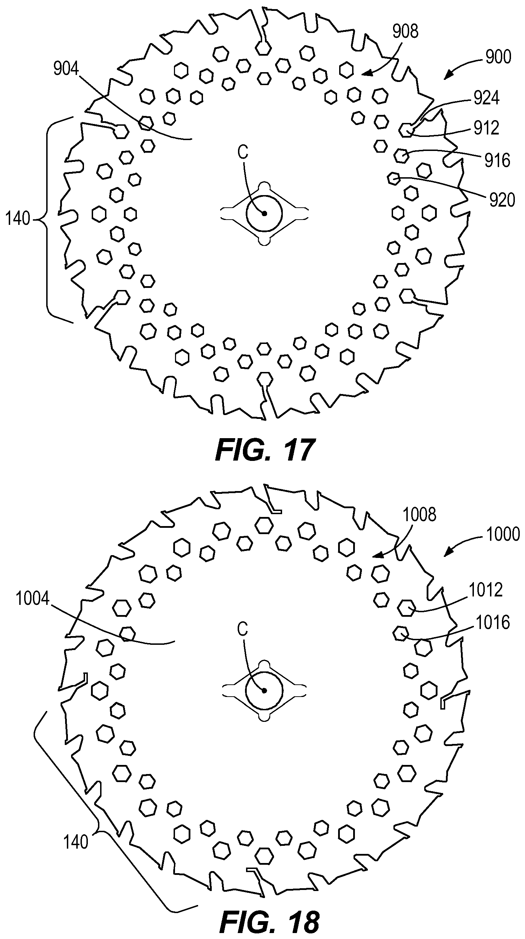

FIG. 17 illustrates another embodiment of a saw blade 900, according to the disclosure. The saw blade 900 includes a body 904 including a plurality of openings 908. The openings of the plurality of openings 908 are in the shape of hexagons. Similar to the bodies 404, 504, and 804, the body 904 includes outer openings 912, middle openings 916, and inner openings 920. Each of the openings of the outer, middle, and inner openings 912, 916, 920 includes a width. The widths of the outer openings 912 are larger than the widths of the middle openings 916. The widths of the middle openings 916 are larger than the widths of the inner openings 920. The outer openings 912 are disposed radially outward relative to the middle openings 916, and the middle openings 916 are disposed radially outward relative to the inner openings 920. The middle openings 916 are angularly staggered relative to the outer and inner openings 912, 920 from the center C. The outer and inner openings 912, 920 are angularly aligned relative to the center C. The outer, middle, and inner openings 912, 916, 920 are not in clusters delegated to the segments 140. Rather, the outer, middle, and inner openings 912, 916, 920 are continuously placed about the center C. In total, the outer and inner openings 912, 916 amount to 70 openings. In other embodiments, the saw blade 900 may include fewer or more openings 912, 916, 920. The body 904 includes slots 924 that separate the segments 140 and are connected to some of the outer openings 912.

FIG. 18 illustrates another embodiment of a saw blade 1000, according to the disclosure. The saw blade 1000 includes a body 1004 including a plurality of openings 1008. The openings of the plurality of openings 1008 are in the shape of hexagons. The body 1004 includes outer openings 1012 and inner openings 1016. Each of the openings of the outer and inner openings 1012, 1016 includes a width. The widths of the outer openings 1012 are larger than the widths of the inner openings 1016. The outer openings 1012 are disposed radially outward relative to the inner openings 1016. The outer openings 1012 are angularly staggered relative to the inner openings 1016 from the center C. The outer and inner openings 1012, 1016 are not in clusters delegated to the segments 140. Rather, the outer and inner openings 1012, 1016 are continuously placed about the center C. In other words, the outer and inner openings 1012, 1016 are not placed on the body 1004 regardless of the segment 140. In total, the outer and inner openings 1012, 1016 amount to 48 openings. In other embodiments, the saw blade 100 may include fewer or more openings 1012, 1016.

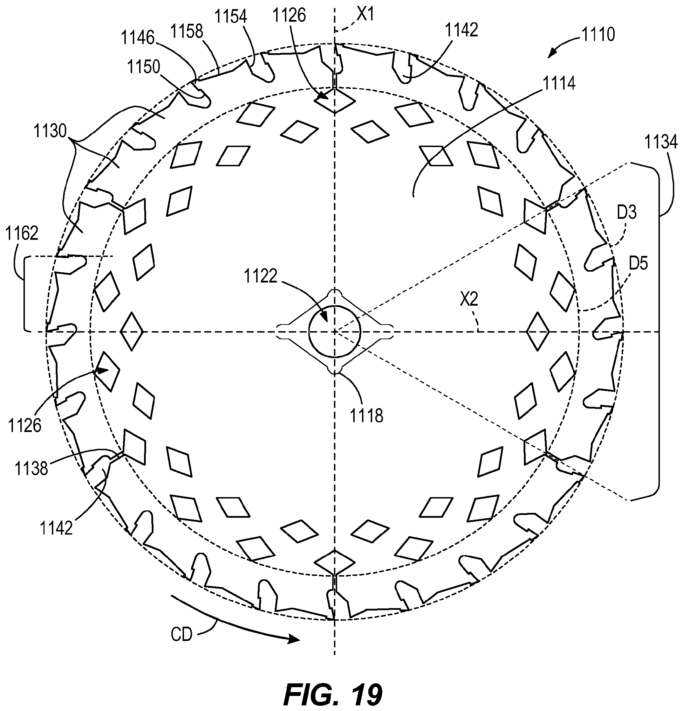

FIGS. 19-21 illustrate a saw blade 1110, according to another embodiment of the present disclosure. In the illustrated embodiment, the saw blade 1110 is a circular saw blade that is selectively useable with a circular saw, a table saw, a miter saw, or the like. However, in other embodiments, the saw blade 1110 can be a different type of saw blade that can be coupled to a corresponding power tool.

As illustrated in FIG. 19, the saw blade 1110 includes a core portion or body 1114, an arbor 1118 located in the center of the body 1114, and a bore 1122 positioned in the arbor 1118 and configured to allow the saw blade 1110 to fit on a power tool shaft that has a complementary shape to the bore 1122. The arbor 1118 is bisected by the axis X1 and the axis X2. In the illustrated embodiment, the bore 1122 has a circular shape and is configured to fit on a circular shaft. In other embodiments, the bore and shaft may both be another shape, such as a diamond, square, hexagon, semi-circle, and/or the like.

With continued reference to FIG. 19, the saw blade 1110 may further include apertures or openings 1126 positioned about the body 1114 to provide heat dissipation, material relief, airflow, etc. In the illustrated embodiment, the openings 1126 are polygonal (e.g., square, diamond, triangular, etc.), but the openings 1126 could be circular, semi-circular, or the like. The saw blade 1110 even further includes a plurality of cutting teeth 1130 that are spaced along an outer edge diameter D5 of the body 1114 and form a cutting diameter D3 of the saw blade 1110. The cutting teeth 1130 and the body 1114 may be made from a variety of materials, such as high carbon steel. In the illustrated embodiment, the cutting teeth 1130 are integrally formed as a single piece with the body 1114. In other embodiments, the body 1114 may be made of bi-metal and the cutting teeth 1130 may be formed in high-speed steel that is bonded to the body 1114. In still other embodiments, the saw blade 1110 may be made from a variety of materials, such as when a saw blade is a masonry blade. In the illustrated embodiment, all of the cutting teeth 1130 are generally the same shape and size, although relative dimensions of each cutting tooth 1130 could be different in other embodiments.

In the illustrated embodiment, the cutting teeth 1130 are arranged in consecutive segments 1134 about the saw blade 1110, and the segments 1134 may be separated by one or more slots 1138. In some embodiments, the saw blade 1110 may include approximately one to eight cutting teeth 1130 in each segment 1134. In other embodiments, the saw blade 1100 may include fewer or more slots 1138 separating the cutting teeth 1130 into fewer or more segments 1134. That is, the saw blade 1100 can have any number of cutting teeth 1130 and segments 1134. The slots 1138 may enable flexing (e.g., expansion, compression, etc.) of the cutting teeth 1130/segments 1134 under certain conditions, such as high-heat cutting applications. In general, adjacent cutting teeth 1130 are separated by a gullet 1142 that allows for debris (e.g., chips, chunks, etc.) passage during the cutting operation. In the illustrated embodiment, several of the slots 1138 extend between one or more of the gullets 1142 and one or more of the openings 1126. Specifically, the illustrated saw blade 1110 includes one slot 1138 extending from a single gullet 1142 for every four cutting teeth 1130, such that one segment 1134 is provided between consecutive slots 1138.

Referring now to FIGS. 19-21, each cutting tooth 1130 includes a tip 1146, a rake face 1150 extending from the tip 1146, a heel face 1154 opposite the rake face 1150, and one or more relief surfaces 1158 extending between the tip 1146 and the heel face 1154. In general, the gullet 1142 is formed between the rake face 1150 of one cutting tooth 1130 and the heel face 1154 of an adjacent cutting tooth 1130. Additionally, a step 1162 between cutting teeth 1130 is defined between the tip 1146 of one cutting tooth 1130 and the tip 1146 of an adjacent cutting tooth. In other words, the gullets 1142 may separate adjacent cutting teeth 1130, and each step 1162 includes a single cutting tooth 1130 and a single gullet 1142. In the illustrated embodiment, the rake face 1150 of each cutting tooth 1130 may extend between the tip 1146 and a portion of the gullet 1142 at an oblique angle relative to the axis X2 spanning a diameter (e.g., any straight-line segment that passes through the center of the saw blade 1110 and whose endpoints lie on the cutting diameter D3) of the saw blade 1110. In the illustrated embodiment, the rake face 1150 is angled forwardly in a cutting direction of the saw blade 1110 (e.g., in a cutting direction CD of the saw blade 1110).

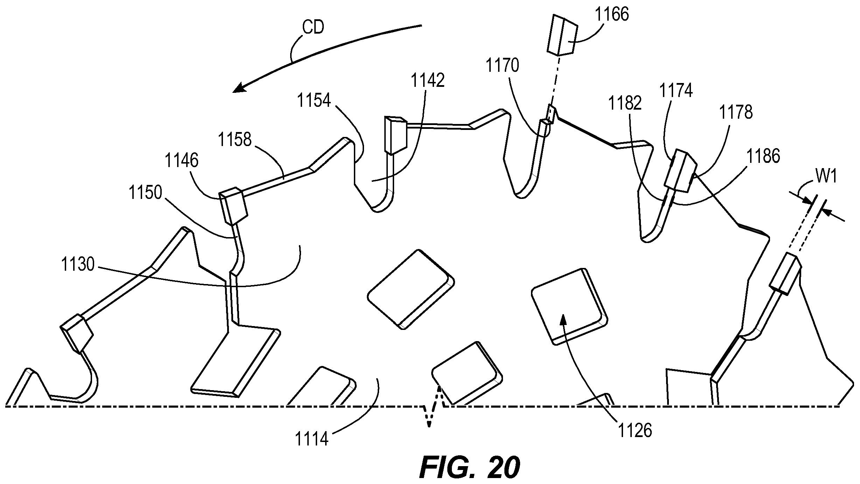

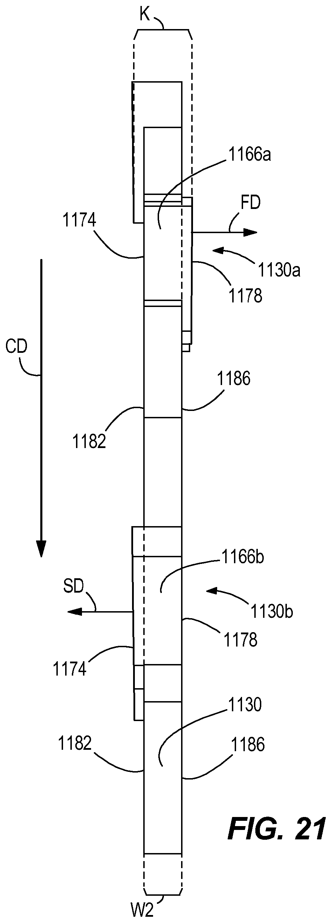

Referring specifically to FIGS. 20 and 21, each of the cutting teeth 1130 also includes an insert 1166 that forms at least a part of the cutting teeth 1130. For example, each insert 1166 may form the tip 1146, part of the rake face 1150, and part of the relief surface 1158. The inserts 1166 may be fastened (e.g., welded, brazed, or otherwise secured) to the cutting teeth 1130. In some embodiments, only some of the cutting teeth 1130 may include an insert 1166. In other embodiments, the cutting teeth 1130 may not include carbide inserts. The inserts 1166 may be made of a material that is different than the body 1114 and the rest of each cutting teeth 1130. In the illustrated embodiment, the inserts 1166 are made of carbide (e.g., tungsten carbide) or a similar material. In other embodiments, the inserts 1166 could be made of a similar material as the body 1114 and the rest of each cutting teeth 1130, such as high-speed steel. The axis X1 extends through or intersects the tip 1146 of the insert 1166 (FIG. 19). The tip 1146 is the corner (or point) of the insert 1166 furthest from the remainder of the cutting tooth 1130. The tip 1146 may be the portion of insert 1166 that is circumferentially furthest from the remainder of the cutting tooth 1130.

With continued reference to FIGS. 20 and 21, each insert 1166 may be received in a pocket 1170 that is formed at the tip 1146 of a corresponding cutting tooth 1130. The inserts 1166 each have a first edge 1174 and an opposing second edge 1178, and an insert width W1 of each insert 1166 may be defined between the first edge 1174 and the second edge 1178 of the respective insert 1166. Similarly, a blade width W2 of the rest of the saw blade 1110 (e.g., the body 1114 and the cutting teeth 1130) is defined between a first surface 1182 and an opposing second surface 1186 of the saw blade 1110. The insert width W1 in the illustrated embodiment may be greater than the blade width W2.

During manufacturing of the saw blade 1110, as described in greater detail below with reference to FIG. 21, adjacent inserts 1166 may be misaligned with one another to protrude beyond the blade width W2 in opposing directions (e.g., off-center type configuration). In the illustrated embodiment, each insert 1166 may be aligned in the off-center configuration and then fastened to the saw blade 1110. In other embodiments, the inserts 1166 may have a larger insert width W1 and may be fastened to the saw blade 1110 in a centered configuration. In such embodiments, material may be removed (e.g., ground, cut, etc.) from opposite sides of alternating inserts 1166 after the inserts 1166 are fastened to the saw blade 1110. In one such embodiments, additional material may be ground off from opposite sides of alternating inserts during a clean-up operation.

Referring now to FIG. 21, a first insert 1166a may be fastened to the pocket 1170 of a first cutting tooth 1130a so that the first edge 1174 aligns (e.g., flush, plum, etc.) with the first surface 1182 of the saw blade 1110. Accordingly, the second edge 1178 of the first insert 1166a protrudes in a first direction FD, transverse to the cutting direction CD, beyond the second surface 1186 of the saw blade 1110. Conversely, a second insert 1166b may be fastened to the pocket 1170 of an immediately adjacent second cutting tooth 1130b (e.g., cutting teeth 1130 that are separated by a single step 1162) so that the second edge 1178 aligns with the second surface 1186 of the saw blade 1110. Thus, the first edge 1174 of the second insert 1166b protrudes in a second direction SD, opposite the first direction FD, beyond the first surface 1182 of the saw blade 1110. Stated another way, the second edge 1178 of the first insert 1166a protrudes away from the blade 1110 beyond the blade width W2 in the first direction FD by an amount, and the first edge 1174 of the second insert 1166b protrudes away from the blade 1110 beyond the blade width W2 in the second direction SD by an amount. The amounts that the first and second inserts 1166a, 1166b protrude away from the blade 1110 may be approximately the same. In some embodiments, the first and second inserts 1166a, 1166b may protrude away from the blade 1110 by different amounts.

During a cutting operation, the saw blade 1110 is configured to create a slit (e.g., cut) in a workpiece, and a width of a single slit is dependent on a kerf K of the saw blade 1110, where the kerf K is defined as the distance (e.g., width) between the second edge 1178 of the first insert 1166a and the first edge 1174 of the second insert 1166b. The kerf K in the illustrated embodiment is greater than the width of the saw blade 1110 and is provided by the protruding edges (e.g., first edge 1174 and second edge 1178) of immediately adjacent inserts 1166 along the cutting diameter D3 (FIG. 20) of the saw blade 1110. In other words, the kerf K follows a tooth form that is defined by the first edge 1174 and second edge 1178, which are aligned to alternately protrude away from the saw blade 1110 in opposite directions.

More simply, adjacent inserts 1166 create portions of the kerf K on alternating sides of the saw blade 1110. Such an arrangement/configuration of the inserts 1166 around the cutting diameter D3 (FIG. 20) may be advantageous for reducing the amount of carbide material needed, thus increasing the cost-savings in the manufacturing of the saw blade 1110. For instance, by aligning the inserts 1166 in the alternating configuration described herein, thinner than conventional (e.g., where insert width and/or blade width are approximately equal to the kerf) inserts 1166 may be used to create a generally conventional width kerf.

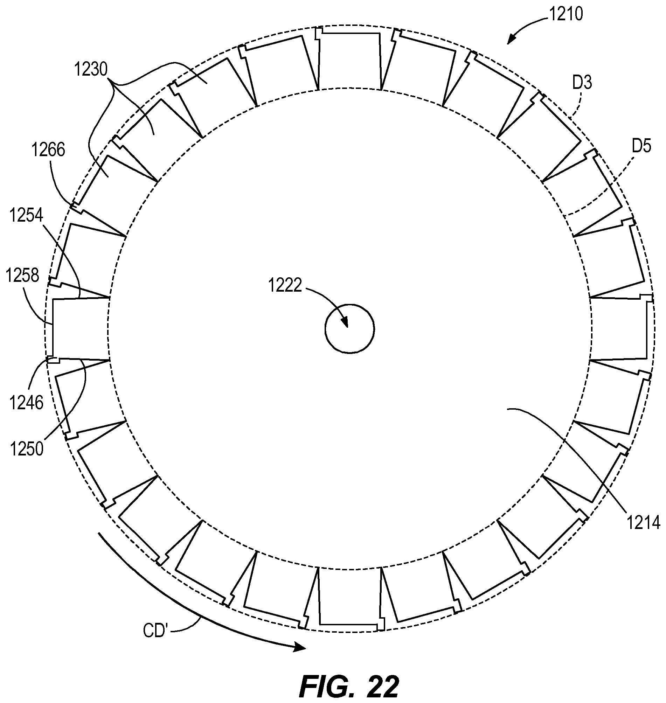

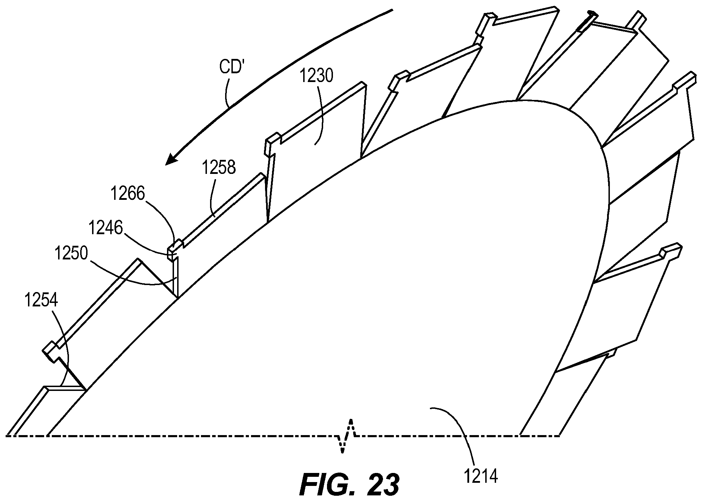

FIGS. 22-24B illustrate a saw blade 1210 that is similar to the saw blade 1110. Similar features include the same reference number, plus "100". Similar dimensions/labels include the same reference alphanumeric, with an added " ' ". Only some differences and similarities between the saw blade 1210 and the saw blade 1110 will be described below. It should be understood that features described for the saw blade 1110 but not shown or described for the saw blade 1210, or vice versa, are generally contemplated for inclusion/exclusion with both saw blades 1110, 1210. For example, the arbor 1118, openings 1126, slots 1138, and the like illustrated in FIG. 19 could be provided on the saw blade 1210 illustrated in FIG. 22.

As shown in FIG. 22-24B, the saw blade 1210 includes a body 1214, a bore 1222, cutting teeth 1230, the outer edge D5, and the cutting diameter D3. Each cutting tooth 1230 includes a tip 1246, a rake face 1250, a heel face 1254, and a relief surface 1258; the tip 1246 and the rake face 1250 generally face the cutting direction CD' of the saw blade 1210. In the illustrated embodiment, each cutting tooth 1230 is also configured to receive an insert 1266 that may be fastened thereto. In some embodiments, the inserts 1266 may be integrally formed with cutting teeth 1230. In general, the inserts 1266 protrude away from the cutting teeth 1230 to define the cutting diameter D3 (e.g., overall tooth form).

Referring now to FIGS. 22-24B, the cutting teeth 1230 may be set (e.g., bent) relative to the body 1214 in alternating directions to define a kerf K' of the saw blade 1210. In the illustrated embodiment, the inserts 1266 each have an insert width W1' that is approximately similar to a blade width W2' of the rest of the saw blade 1210 (e.g., width of the body 1214 and the cutting teeth 1230). In other embodiments, the insert width W1' and the blade width W2' may be different. In the illustrated embodiment, the blade width W2' is defined between a first surface 1284 and an opposing second surface 1286 of the saw blade 1210. The inserts 1266 may be fastened to align centrally on the cutting teeth 1230. In an alternate embodiment, inserts 1266 may be fastened to the cutting teeth 1230 in another arrangement, such as the offset arrangement described herein.

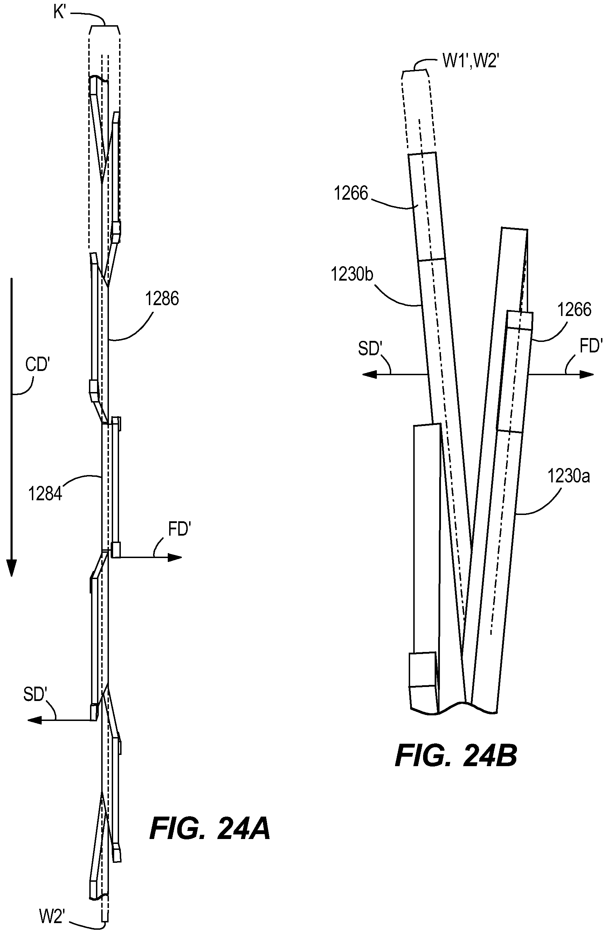

With specific reference to FIGS. 24A and 24B, a first cutting tooth 1230a is set in a first direction FD', transverse to the cutting direction CD', away from the second surface 1286 of the saw blade 1210. Conversely, a second cutting tooth 1230b immediately adjacent to the first cutting tooth 1230a is set in a second direction SD', opposite the first direction FD', away from the first surface 1284 of the saw blade 1210. Stated another way, the cutting teeth 1230 are set in alternating directions by approximately the same amount to provide a kerf K' that is larger than the blade width W2' without increasing the blade width W2' or the insert width W1'. Although a direction each cutting tooth 1230 is set flips back-and-forth between each cutting tooth 1230 in the illustrated embodiment, the direction may stay the same for multiple adjacent cutting teeth 1230 before changing. For example, the illustrated saw blade 1210 includes an equal pattern of one cutting tooth 1230 set in the first direction FD', then another cutting tooth 1230 set in the second direction SD', followed by one cutting tooth 1230 set in the first direction FD', and so on. The saw blade 1210 in another embodiment may include more than one cutting tooth 1230 set in the first direction FD', then one or more cutting teeth 1230 set in the second direction SD', followed by one or more cutting teeth 1230 set in the first direction FD', and so on. As such, a pattern or tooth form of the saw blade 1210 (e.g., set direction) need not be symmetric or perfectly repetitive to achieve the desired kerf K' from the described tooth arrangement.

In some embodiments, the cutting teeth 1230 bent in either direction are set relative to the corresponding surface (e.g., first surface 1284 for cutting teeth 1230 bent in second direction SD', second surface 1286 for cutting teeth 1230 bent in first direction FD') by a distance of approximately 0.1 millimeters to approximately 0.5 millimeters (e.g., 0.3 millimeters) to define a kerf K' of approximately 2.0 millimeters to approximately 2.8 millimeters. In other embodiments, the cutting teeth 1230 may be bent or set by a greater or lesser amount to provide a kerf K' of a different size. Further, a blade width W2' may also be increased or decreased based on a desired kerf K'. In general, setting the cutting teeth 1230 outwardly away from each other allows for the use of a thinner saw blade 1210, thus decreasing at least material cost.

Although the disclosure has been described in detail with reference to certain preferred embodiments, variations and modifications exist within the scope and spirit of one or more independent aspects of the disclosure as described. Various features and advantages of the disclosure are set forth in the following claims.

### REPRESENTATIVE FEATURES

Representative features are set out in the following clauses, which stand alone or may be combined, in any combination, with one or more features disclosed in the text and/or drawings of the specification.
1. A circular saw blade comprising:
   a body;
   an arbor located in a center of the body;
   a bore positioned in the arbor and configured to fit on a power tool shaft;
   a plurality of cutting teeth spaced along an outer edge of the body; and
   a plurality of openings formed in the body between the plurality of cutting teeth and the arbor, the plurality of openings including a first opening and a second opening disposed radially inward from the first opening relative to the center of the body, the second opening at least partially overlapping the first opening in a circumferential direction, a radial direction, or both.
2. The circular saw blade of clause 1, wherein the first opening is one of a plurality of first openings, wherein the second opening is one of a plurality of second openings, and wherein each of the plurality of second openings at least partially overlaps one of the plurality of first openings in the circumferential direction, the radial direction, or both.
3. The circular saw blade of clause 2, wherein the plurality of first openings is arranged in a first circle defining a first diameter, and wherein the plurality of second openings is arranged in a second circle defining a second diameter that is less than the first diameter.
4. The circular saw blade of clause 1, wherein the second opening at least partially overlaps the first opening in the circumferential direction and does not overlap the first opening in the radial direction.
5. The circular saw blade of clause 1, wherein the first opening and the second opening are both polygonal.
6. The circular saw blade of clause 1, wherein the first opening and the second opening have similar shapes.
7. The circular saw blade of clause 1, wherein the first opening has a larger area than the second opening.
8. The circular saw blade of clause 1, wherein the first opening is a polygonal opening having a first area, and wherein the second opening is a polygonal opening having a second area that is less than the first area.
9. The circular saw blade of clause 1, further comprising a plurality of inserts welded to the plurality of cutting teeth to forms tips of the plurality of cutting teeth.
10. The circular saw blade of clause 9, wherein each of the plurality of cutting teeth includes a pocket configured to receive an insert of the plurality of inserts, and wherein the pocket includes a first wall adjacent a height of the insert and a second wall adjacent a width of the insert.
11. The circular saw blade of clause 10, wherein the first wall has a length between 20% and 70% of the height of the insert.
12. The circular saw blade of clause 10, wherein the second wall has a length between 30% and 100% of the width of the insert.
13. The circular saw blade of clause 10, wherein an angle between the first wall and the second wall is between 60 degrees and 110 degrees.
14. The circular saw blade of clause 9, wherein each insert of the plurality of inserts includes a rake face, and wherein the rake face has a hook angle between 13 and 22 degrees.
15. The circular saw blade of clause 9, wherein the plurality of inserts defines a cutting diameter of the circular saw blade, wherein the plurality of cutting teeth includes a plurality of heel faces, wherein the plurality of heel faces defines a limiting diameter that is less than the cutting diameter, and wherein a difference in size between the limiting diameter and the cutting diameter is between 1 and 5 millimeters.
16. The circular saw blade of clause 9, further comprising a physical vapor deposition coating applied to at least the plurality of inserts.
17. A method of manufacturing a circular saw blade, the method comprising:
   providing a body;
   forming an arbor in a center of the body, the arbor having a bore configured to fit on a power tool shaft;
   forming a plurality of cutting teeth along an outer edge of the body;
   welding a plurality of inserts to the plurality of cutting teeth, each insert forming a tip of a corresponding cutting tooth; and
   applying a coating via physical vapor deposition to at least the plurality of inserts after the plurality of inserts is welded to the plurality of cutting teeth.
18. The method of clause 17, wherein applying the coating includes applying a coating having a mixture of nitrides of aluminum, chromium, and/or titanium.
19. The method of clause 17, further comprising tempering the circular saw blade after welding the plurality of inserts to the plurality of cutting teeth.
20. The method of clause 19, wherein tempering includes inserting the circular saw blade into an oven between 30 minutes and 3 hours at a temperature between 300 degrees Fahrenheit and 800 degrees Fahrenheit.
21. The method of clause 17, further comprising edge prepping a cutting edge of the plurality of inserts after welding the plurality of inserts to the plurality of cutting teeth and before applying the coating.
22. The method of clause 21, wherein edge prepping includes forming a radius between 0.025 millimeters and 0.100 millimeter on a cutting edge of each insert of the plurality of inserts.
23. The method of clause 17, further comprising forming a plurality of openings in the body between the plurality of cutting teeth and the arbor.
24. The method of clause 23, wherein forming the plurality of openings includes forming a plurality of first openings and a plurality of second openings disposed radially inward from the plurality of first openings relative to the center of the body, each second opening at least partially overlapping one of the plurality of first openings in a circumferential direction, a radial direction, or both.
25. The method of clause 17, wherein welding the plurality of inserts to the plurality of cutting teeth includes welding a plurality of cylindrical inserts to the plurality of cutting teeth.
26. A circular saw blade comprising:
   a body;
   an arbor located in a center of the body;
   a bore positioned in the arbor and configured to fit on a power tool shaft;
   a plurality of cutting teeth spaced along an outer edge of the body, each cutting tooth defining a pocket;
   a plurality of inserts welded to the plurality of cutting teeth, each insert positioned in the pocket and forming a tip of a corresponding cutting tooth; and
   a physical vapor deposition coating applied to at least the plurality of inserts.
27. The circular saw blade of clause 26, wherein the physical vapor deposition coating comprises a mixture of nitrides of aluminum, chromium, and/or titanium.
28. The circular saw blade of clause 26, wherein the plurality of inserts is edge prepped before the physical vapor deposition coating is applied.
29. The circular saw blade of clause 26, further comprising a plurality of polygonal openings formed in the body between the plurality of cutting teeth and the arbor.
30. The circular saw blade of clause 29, wherein the plurality of polygonal openings includes a first opening and a second opening disposed radially inward from the first opening relative to the center of the body, and wherein the second opening at least partially overlaps the first opening in a circumferential direction, a radial direction, or both.
31. The circular saw blade of clause 30, wherein the first opening is one of a plurality of first openings, wherein the second opening is one of a plurality of second openings, and wherein each of the plurality of second openings at least partially overlaps one of the plurality of first openings in the circumferential direction, the radial direction, or both.

## Claims

1. A circular saw blade comprising:
a body;
an arbor located in a center of the body;
a bore positioned in the arbor and configured to fit on a power tool shaft;
a plurality of cutting teeth spaced along an outer edge of the body; and
a plurality of openings formed in the body between the plurality of cutting teeth and the arbor, the plurality of openings including a first opening and a second opening disposed radially inward from the first opening relative to the center of the body, the second opening at least partially overlapping the first opening in a circumferential direction, a radial direction, or both.

2. The circular saw blade of claim 1, wherein the first opening is one of a plurality of first openings, wherein the second opening is one of a plurality of second openings, and wherein each of the plurality of second openings at least partially overlaps one of the plurality of first openings in the circumferential direction, the radial direction, or both.

3. The circular saw blade of claim 2, wherein the plurality of first openings is arranged in a first circle defining a first diameter, and wherein the plurality of second openings is arranged in a second circle defining a second diameter that is less than the first diameter.

4. The circular saw blade of any preceding claim, wherein:
the second opening at least partially overlaps the first opening in the circumferential direction and does not overlap the first opening in the radial direction, and/or
the first opening and the second opening are both polygonal, and/or
the first opening and the second opening have similar shapes, and/or
the first opening has a larger area than the second opening, and/or
the first opening is a polygonal opening having a first area, and wherein the second opening is a polygonal opening having a second area that is less than the first area.

5. The circular saw blade of any preceding claim, further comprising a plurality of inserts welded to the plurality of cutting teeth to forms tips of the plurality of cutting teeth, preferably wherein each of the plurality of cutting teeth includes a pocket configured to receive an insert of the plurality of inserts, and wherein the pocket includes a first wall adjacent a height of the insert and a second wall adjacent a width of the insert.

6. The circular saw blade of claim 5, wherein:
the first wall has a length between 20% and 70% of the height of the insert, and/or
the second wall has a length between 30% and 100% of the width of the insert, and/or
an angle between the first wall and the second wall is between 60 degrees and 110 degrees.

7. The circular saw blade of claim 5:
wherein each insert of the plurality of inserts includes a rake face, and wherein the rake face has a hook angle between 13 and 22 degrees, and/or
wherein the plurality of inserts defines a cutting diameter of the circular saw blade, wherein the plurality of cutting teeth includes a plurality of heel faces, wherein the plurality of heel faces defines a limiting diameter that is less than the cutting diameter, and wherein a difference in size between the limiting diameter and the cutting diameter is between 1 and 5 millimeters, and/or
further comprising a physical vapor deposition coating applied to at least the plurality of inserts.

8. A method of manufacturing a circular saw blade, the method comprising:
providing a body;
forming an arbor in a center of the body, the arbor having a bore configured to fit on a power tool shaft;
forming a plurality of cutting teeth along an outer edge of the body;
welding a plurality of inserts to the plurality of cutting teeth, each insert forming a tip of a corresponding cutting tooth; and
applying a coating via physical vapor deposition to at least the plurality of inserts after the plurality of inserts is welded to the plurality of cutting teeth.

9. The method of claim 8:
wherein applying the coating includes applying a coating having a mixture of nitrides of aluminum, chromium, and/or titanium, and/or
further comprising tempering the circular saw blade after welding the plurality of inserts to the plurality of cutting teeth, preferably wherein tempering includes inserting the circular saw blade into an oven between 30 minutes and 3 hours at a temperature between 300 degrees Fahrenheit and 800 degrees Fahrenheit, and/or
further comprising edge prepping a cutting edge of the plurality of inserts after welding the plurality of inserts to the plurality of cutting teeth and before applying the coating., preferably wherein edge prepping includes forming a radius between 0.025 millimeters and 0.100 millimeter on a cutting edge of each insert of the plurality of inserts.

10. The method of claim 8, further comprising forming a plurality of openings in the body between the plurality of cutting teeth and the arbor, preferably wherein forming the plurality of openings includes forming a plurality of first openings and a plurality of second openings disposed radially inward from the plurality of first openings relative to the center of the body, each second opening at least partially overlapping one of the plurality of first openings in a circumferential direction, a radial direction, or both.

11. The method of claim 8, wherein welding the plurality of inserts to the plurality of cutting teeth includes welding a plurality of cylindrical inserts to the plurality of cutting teeth.

12. A circular saw blade comprising:
a body;
an arbor located in a center of the body;
a bore positioned in the arbor and configured to fit on a power tool shaft;
a plurality of cutting teeth spaced along an outer edge of the body, each cutting tooth defining a pocket;
a plurality of inserts welded to the plurality of cutting teeth, each insert positioned in the pocket and forming a tip of a corresponding cutting tooth; and
a physical vapor deposition coating applied to at least the plurality of inserts.

13. The circular saw blade of claim 12:
wherein the physical vapor deposition coating comprises a mixture of nitrides of aluminum, chromium, and/or titanium, and/or
wherein the plurality of inserts is edge prepped before the physical vapor deposition coating is applied, and/or
further comprising a plurality of polygonal openings formed in the body between the plurality of cutting teeth and the arbor.

14. The circular saw blade of claim 13, wherein the plurality of polygonal openings includes a first opening and a second opening disposed radially inward from the first opening relative to the center of the body, and wherein the second opening at least partially overlaps the first opening in a circumferential direction, a radial direction, or both.

15. The circular saw blade of claim 14, wherein the first opening is one of a plurality of first openings, wherein the second opening is one of a plurality of second openings, and wherein each of the plurality of second openings at least partially overlaps one of the plurality of first openings in the circumferential direction, the radial direction, or both.
